# EUROPÄISCHE PATENTANMELDUNG

(11) **EP 0 872 326 A1**
(43) Veröffentlichungstag der Anmeldung: **21.10.1998**
(21) Anmeldenummer: 98106565.9
(22) Anmeldetag: 09.04.1998
(51) Int. Cl.: B29C 47/06, B29D 9/00

(54) **Verfahren zur Herstellung von Polymerlaminaten**

(30) Priorität: 17.04.1997 DE 19715996
(71) Anmelder: Clariant GmbH, 65929 Frankfurt am Main (DE)
(72) Erfinder: Dietz, Erwin Dr., 61462 Königstein (DE); Schönfeld, Axel Dr., 65207 Wiesbaden (DE); Dewald, Bernd, 65510 Idstein (DE)

(57) **Zusammenfassung**

Polymerlaminate werden hergestellt, indem ein oder mehrere thermoplastische cholesterische flüssigkristalline Polymere mit einem oder mehreren thermoplatischen Trägerpolymeren coextrudiert und in Form dünner Filme übereinandergelagert werden. Aus diesen Polymerlaminaten können durch Trennung der flüssigkristallinen von den Trägerpolymerfilmen Effektpigmente mit vom Blickwinkel abhängiger Farbigkeit hergestellt werden.

## Beschreibung

Die Erfindung betrifft ein Verfahren zur Herstellung von Polymerlaminaten und daraus hergestellte Effektpigmente aus thermoplastischen cholesterischen Flüssigkristallpolymeren (cLCPs) mit optisch variablen Eigenschaften.

Cholesterische Hauptkettenpolymere sind bekannt und können analog nematischer Hauptkettenpolymere hergestellt werden, indem ein zusätzliches chirales Comonomer verwendet wird (US-A-4,412,059; EP-A-0 196 785; EP-A-0 608 991; EP-A-0 391 368) oder indem nematische Hauptkettenpolymere (LCP) mit zusätzlichen chiralen Comonomeren umgesetzt werden (EP-A-0 283 273). Cholesterische Hauptkettenpolymere zeichnen sich durch ihre helikale Überstruktur aus. Diese führt zum einen dazu, daß das Material nicht mehr die bei nematischen Flüssigkristallpolymeren übliche Anisotropie der mechanischen Eigenschaften aufweist. Je nach Gehalt an chiralem Monomer zeigt das Material ausgeprägte Farbeffekte, die auf der selektiven Reflexion an der helikalen Überstruktur beruhen. Die genaue Reflexionsfarbe hängt hierbei vom Betrachtungswinkel und vor allem von der Ganghöhe der Helix ab. Für jeden beliebigen Betrachtungswinkel - zum Beispiel senkrechte Aufsicht auf einen Probekörper - erscheint als Reflexionsfarbe eine Farbe mit einer Wellenlänge, die der Ganghöhe der helikalen Überstruktur entspricht. Dies bedeutet, daß das reflektierte Licht eine umso kürzere Wellenlänge hat, je kleiner die Ganghöhe der Helix ist. Die sich ausbildende Ganghöhe der Helix hängt im wesentlichen von dem Anteil des chiralen Comonomers, der Art des Einbaus in das Polymer, des Polymerisationsgrads und der Struktur des chiralen Comonomers ab.

Um bei dünnen Schichten cholesterischer Flüssigkristalle zu ausgeprägten Farbeffekten zu gelangen, ist in der Regel ein lichtabsorbierender, insbesondere schwarzer Untergrund notwendig, da ansonsten aufgrund eines nicht hinreichend ausgeprägten Deckvermögens der cholesterischen Flüssigkristalle der nicht selektive Teil des Lichts am Untergrund reflektiert wird, was den Farbeindruck schwächt. Es ist ferner bekannt (H. J. Eberle, Liquid Crystals, 1989, Vol. 5, No. 3, Seite 907 - 916), daß anstelle eines schwarzen Untergrunds auch anders eingefärbte Untergründe verwendet werden können.

Die US-PS 5 364 557 beschreibt ein Verfahren, bei dem cholesterische Flüssigkristallpolymere in der Schmelze auf ein Band aufgerakelt werden. Nach dem Erkalten werden die dünnen Filme z.B. durch Abstreifer oder durch Ultraschallbehandlung von dem Band abgetrennt und anschließend zu Plättchen gebrochen. Das beschriebene Verfahren hat den Nachteil, daß es nur bei niedrig schmelzenden Polymeren mit niedriger Schmelzenviskosität eingesetzt werden kann. Effektpigmente auf Basis niedrigschmelzender cholesterischer Flüssigkristallpolymere zeigen jedoch in Lackschichten ungenügende Temperaturstabilitäten.

Die EP-A-0 601 483 beschreibt ein Verfahren, nach dem ein Polyorganosiloxan bei etwa 120°C auf eine Polyethylenterephthalatfolie aufgerakelt und vernetzt wird. Die mechanische Abtrennung des erhaltenen Films von der Folie wird dadurch erreicht, daß die Folie über eine Umlenkrolle mit keinem Durchmesser geführt wird, wobei das vernetzte Material vom Träger abblättert. Dieses Verfahren ist nicht geeignet, thermoplastische, in Lösemitteln unlösliche cholesterische Flüssigkristallpolymere in dünne Filme zu überführen.

Aufgabe der vorliegenden Erfindung ist es, die im Stand der Technik aufgeführten Nachteile zu umgehen und ein Verfahren zur Verfügung zu stellen, welches es erlaubt vom Betrachtungswinkel abhängige Effektpigmente herzustellen, die eine hohe Temperaturstabilität und eine hohe Chemikalienresistenz (Unlöslichkeit) aufweisen.

Es wurde gefunden, daß sich die im Stand der Technik aufgeführten Nachteile überraschenderweise durch eine Coextrusion von thermoplastischen, cholesterischen flüssigkristallinen Polymeren mit einem weiteren Thermoplasten umgehen lassen, wobei auf einfache Weise temperaturstabile und chemikalienresistente Effektpigmente bereitgestellt werden können.

Gegenstand der vorliegenden Erfindung ist ein Verfahren zur Herstellung von Polymerlaminaten, dadurch gekennzeichnet, daß ein oder mehrere thermoplastische cholesterische flüssigkristalline Polymere mit einem oder mehreren thermoplastischen Trägerpolymeren coextrudiert und in Form dünner Filme übereinandergelagert werden.

Unter Coextrusion, auch Mehrschichtextrusion genannt, werden Verfahren verstanden, bei denen im Extrusionsverfahren mindestens zwei Polymere in der Schmelze übereinandergelagert werden. Solche Verfahren sind bekannt (W.J. Schrenk, T. Alfrey Jr., Polymer Blends Vol. 2, Seite 129 - 165) und werden insbesondere für die Herstellung von Verbundfolien eingesetzt. Mehrschicht- oder Verbundfolien werden insbesondere in der Lebensmittelindustrie für die Herstellung von Frischhaltefolien, in der Landwirtschaft für Abdeckfolien oder auch als Deponiefolien eingesetzt.

Das Zusammenführen der Polymermaterialien bei der Coextrusion kann auf verschiedene Weise erfolgen. Die Polymermaterialien können in einem Adapter ("feed-block") vor dem Austrittskopf des Extruders zusammengeführt und dann im Kopf auf die Austrittsform gebracht werden. Hierbei ist es von Vorteil, wenn die Fließgeschwindigkeiten der einzelnen Schmelzeströme den einzelnen Schichten angepaßt werden können. Dies kann z.B. erfolgen durch von außen bedienbare Schieber oder auch durch Austausch von Adaptern mit unterschiedlichen Schmelzestromquerschnitten.

Bevorzugte Verfahren sind solche, bei denen die Polymerschmelzen im Kopf des Extruders ("vane die") vor Austritt aus dem Düsenspalt übereinandergeführt werden.

Von Vorteil ist auch hierbei, wenn die Fließgeschwindigkeiten der einzelnen Schmelzströme durch von außen bedienbare Schieber an die jeweilige Schichtdicke angepaßt werden können.

Nach vorgenannten Verfahren, der Coextrusion mit "feed-block" oder "vane die", können 2-, 3-, 4-, 5-, 6-, 7- und mehr Schichten übereinander geführt werden. Die Ausformung der mehrschichtigen Lagen kann je nach verwendeter Geometrie der Austragsdüse verschieden sein. Die mehrschichtigen Lagen können in einer rundgeformten Düsenform zu einer Schlauchfolie extrudiert werden. In einer bevorzugten Ausführungsform werden die mehrschichtigen Lagen aus einer Breitschlitzdüse als Flachfolie ausgetragen.

In einer weiteren Ausführungsform ist es möglich, eine oder mehrere Schichten um einen Mittelstrang (Kabel) zu formen, wobei der Mittelstrang bevorzugt ein Trägerpolymer ist.

Ein bevorzugtes Herstellverfahren für viele Schichten ist die Multi-Layer-Coextrusion. Solche Verfahren sind bekannt (W.J. Schrenk, T. Alfrey Jr., Polymer Blends Vol. 2, Seite 129 - 165). In einer bevorzugten Ausführungsform werden zwei, drei oder mehr Schichten in einem Übergangsstück zusammengeführt, die Schmelzen in einem "die-Element" quer zum Schichtaufbau geteilt und wieder übereinandergeführt und auf den gleichen Querschnitt gebracht. Durch Hintereinanderschalten mehrerer "Die-Elemente" wird der Vorgang wiederholt, wobei jedesmal die Anzahl der Schichten verdoppelt und die Dicke der Schicht halbiert wird. Der Austrag erfolgt vorzugsweise als Flachfolie, kann aber auch in jeder anderen sinnvoll erscheinenden Geometrie erfolgen. Nach diesem Verfahren werden auf einfache Weise sehr rasch Folien mit vielen dünnen Schichten erhalten, beispielsweise ausgehend von einem Zweischichtaufbau 4, 8, 16, 32, 64, 128, 256 und mehr Schichten.

Bei einem Dreischichtaufbau werden dann 6, 12, 24, 48, 96, 192, 384 und mehr Schichten erhalten.

In einer weiteren Ausführungsform der Erfindung werden 2, 3 oder mehr, beispielsweise 4 oder 5, Schichten von cholesterischem Flüssigkristallpolymer durch Coextrusion in dünnen Schichten übereinander geführt, so daß der flüssigkristalline Polymerfilm selbst aus 2, 3, 4, 5 oder mehr Schichten besteht, und von einem Trägerpolymer einseitig oder auch beidseitig bedeckt. Hierbei ist es von Vorteil, wenn die Schichten der cholesterischen Polymere untereinander eine sehr gute Haftung haben, so daß sich bei nachfolgenden Verarbeitungsschritten die cholesterischen Polymerschichten nicht trennen.
Die übereinandergeführten Flüssigkristallschichten können aus einem cholesterischen Flüssigkristallpolymeren mit gleicher Zusammensetzung bestehen. Für besondere optische Farbeffekte ist es jedoch vorteilhaft unterschiedliche cholesterische Flüssigkristallpolymere zu verwenden. Auch können die cholesterischen flüssigkristallinen Polymere mit Farbmitteln eingefärbt sein, wie nachstehend beschrieben.
Besonders vorteilhaft kann es sein, wenn die Mittelschicht zwischen 2 oder mehr cholesterischen Flüssigkristallschichten aus einem eingefärbten Polymer besteht. Als Polymer ist besonders das Flüssigkristallpolymer selbst geeignet. Es können aber auch andere geeignete thermoplastische Polymere eingesetzt werden, wie z.B. Polymethacrylat. Verwendet man für die Mittelschicht als Farbmittel Ruß, werden Effektpigmente mit erhöhtem Deckvermögen erhalten.

Als Trägerpolymere für das erfindungsgemäße Verfahren eignen sich alle thermoplastisch verarbeitbaren Polymere mit filmbildenden Eigenschaften. Bevorzugt als Polymere für die Trägerfolie sind Polyethylen, Polypropylen, Polystyrol, Polycarbonat, Polyester, Polyamid, Styrolacrylnitril-Copolymer sowie thermoplastische Elastomere. Besonders bevorzugt sind Polyethylen, Polypropylen sowie Polystyrol. Es können auch mehrere Trägerpolymere oder Blends eingesetzt werden. Beispielsweise ist in einem 3-lagigen Coextrudat die Schichtfolge Polyethylen, flüssigkristallines Polymer, Polypropylen möglich.

Vorzugsweise wird die Coextrusion mit Polymeren durchgeführt, die in ihrem Fließverhalten aufeinander abgestimmt sind. Manchmal kann es auch vorteilhaft sein, zur Abstimmung der Verträglichkeit der verschiedenen Schichten noch zusätzliche Adhäsionszwischenschichten oder weitere Additive, beispielsweise Wachse, zu verwenden.

Die Extrusion wird vorzugsweise bei Temperaturen durchgeführt, bei denen das cholesterische Flüssigkristallpolymer seinen Farbeffekt aufweist, d.h. oberhalb der Chiralisierungstemperatur. Bei sehr niedrigviskosen flüssigkristallinen Polymeren kann es aber vorteilhaft sein, bei niedrigeren Temperaturen zu extrudieren. In solchen Fällen kann die Farbe des cholesterischen Flüssigkristallpolymeren durch eine Wärmebehandlung des Coextrudats oberhalb der Chiralisierungstemperatur wiedererhalten werden.

Die erfindungsgemäß einsetzbaren thermoplastischen cholesterischen flüssigkristallinen Polymere umfassen sowohl cholesterische flüssigkristalline Hauptkettenpolymere, cholesterische flüssigkristalline Seitengruppenpolymere als auch kombinierte flüssigkristalline Hauptketten-/Seitengruppenpolymere.

Cholesterische flüssigkristalline Seitengruppenpolymere sind beispielsweise Polysiloxane, cyclische Siloxane, Polyacrylate oder Polymethacrylate mit Mesogenen in den Seitengruppen. Die Mesogene in der Seitengruppe sind beispielsweise mit Cholesterin substituierte Phenylbenzoate oder Biphenole.

Die Hauptkettenpolymere sind vorzugsweise flüssigkristalline Polyester, Polyamide oder Polyesteramide, die aromatische und/oder cycloaliphatische Hydroxycarbonsäuren, aromatische Aminocarbonsäuren; aromatische und/oder cycloaliphatische Dicarbonsäuren, und aromatische und/oder cycloaliphatische Diole und/oder Diamine; sowie chirale, bifunktionelle Comonomere enthalten.

Cholesterische flüssigkristalline Hauptkettenpolymere werden bevorzugt aus einer chiralen Komponente sowie aus Hydroxycarbonsäuren und/oder einer Kombination aus Dicarbonsäuren und Diolen hergestellt. In der Regel bestehen die Polymere im wesentlichen aus aromatischen Bestandteilen. Es ist jedoch auch möglich, aliphatische und cycloaliphatische Komponenten, wie beispielsweise Cyclohexandicarbonsäure, einzusetzen.

Bevorzugte cholesterische Polymere im Sinne der vorliegenden Erfindung sind thermoplastische cholesterische flüssigkristalline Hauptkettenpolymere, bestehend im wesentlichen aus
a) 0 bis 99,8 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 50 Mol% mindestens einer Verbindung aus der Gruppe der aromatischen Dicarbonsäuren und cycloaliphatischen Dicarbonsäuren;
c) 0 bis 50 Mol% mindestens einer Verbindung aus der Gruppe der aromatischen und cycloaliphatischen Diole, aromatischen Diamine und aromatischen Hydroxyamine;
d) 0,1 bis 40 Mol%, vorzugsweise 1 bis 25 Mol%, an chiralen, bifunktionellen Comonomeren; wobei die Summe 100 Mol% ergibt.

Bei den angegebenen Prozentsätzen ist darauf zu achten, daß die dem Fachmann bekannte Stöchiometrie der funktionellen Gruppen zur Polykondensation gewährleistet ist. Zusätzlich können die Polymere noch Komponenten mit nur einer funktionellen Gruppe oder mit mehr als zwei funktionellen Gruppen, wie beispielsweise Dihydroxybenzoesäure, Trihydroxybenzole oder Trimellitsäure enthalten. Auf diese Weise kann Einfluß auf das Molekulargewicht der Polymeren genommen werden. Die Komponenten mit mehr als zwei funktionellen Gruppen wirken als Verzweigungsstelle im Polymer und dürfen nur in geringen Konzentrationen, beispielsweise 0 bis 5 Mol-%, zugegeben werden, wenn eine Vernetzung des Materials während der Kondensation vermieden werden soll.

Besonders bevorzugt sind cholesterische Hauptgruppenpolymere, die aus folgenden Bausteinen der einzelnen Monomergruppen aufgebaut sind:
a) Aromatische Hydroxycarbonsäuren, Aminocarbonsäuren:
   Hydroxybenzoesäuren, wie 3-Hydroxy- oder 4-Hydroxybenzoesäure, Hydroxynaphthalincarbonsäuren, wie 2-Hydroxy-7-carboxy- oder 2-Hydroxy-6-carboxynaphthalin, Hydroxybiphenylcarbonsäuren, Aminobenzoesäuren, wie 3-Amino- oder 4-Aminobenzoesäure, Hydroxyzimtsäuren, wie 3-Hydroxy- oder 4-Hydroxyzimtsäure.
b) Aromatische Dicarbonsäuren, aliphatische Dicarbonsäuren:
   Terephthalsäure, Isophthalsäure, Biphenyldicarbonsäuren, wie 4,4'-Dicarboxybiphenyl, Naphthalindicarbonsäuren, wie 2,6- oder 2,7-Naphthalindicarbonsäuren, Cyclohexandicarbonsäuren, Pyridindicarbonsäuren, wie 2,4- oder 2,5-Pyridindicarbonsäure, Diphenyletherdicarbonsäuren, Carboxyzimtsäuren, wie 3- oder 4-Carboxyzimtsäure.
c) Aromatische Diole, Aminophenole, Diamine:
   Hydrochinone, Dihydroxybiphenyle, wie 4,4'-Dihydroxybiphenyl, Tetramethyldihydroxybiphenyle, wie Tetramethyl-4,6-dihydroxybiphenyl, Naphthalindiole, wie 2,6- oder 2,7-Naphthalindiol, Dihydroxydiphenylsulfone, Dihydroxydiphenylether, Dihydroxyterphenyle, Dihydroxydiphenylketone, m- und p- Phenylendiamin, Diaminoanthrachinone, Dihydroxyanthrachinone, m- und p-Aminophenol und Aminonaphthol.
   Vorzugsweise stehen die funktionellen Gruppen der vorstehend genannten Verbindungen nicht in ortho-Stellung zueinander.
d) Chirale, bifunktionelle Monomere:
   Isosorbid, Isomannid, Isoidid, Camphersäure, (D)- oder (L)- Methylpiperazin, (D)- oder (L)- 3-Methyladipinsäure, Butan-2,3-diol sowie 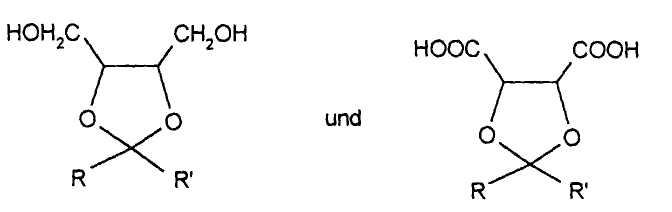 wobei R und R' jeweils unabhängig voneinander H, C₁-C₆-Alkyl oder Phenyl, vorzugsweise H oder CH₃, sind.

Bei der Verwendung von Sulfonsäuregruppen als funktionelle Gruppe zur Kondensation kann es vorteilhaft sein, diese in einer aktivierten Form einzusetzen, zum Beispiel als Sulfochlorid oder als Sulfonsäureester.

Die beschriebenen Polymerbausteine können noch weitere Substituenten, wie beispielsweise Methyl, Methoxy, Cyano oder Halogen, enthalten.

Ganz besonders bevorzugt im Sinne der vorliegenden Erfindung sind Polymere, enthaltend ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl sowie Camphersäure, Isosorbid, Isomannid als chirale Komponente.

Die Polykondensation kann nach allen üblichen Methoden durchgeführt werden. Beispielsweise eignet sich die Schmelzkondensation mit Acetanhydrid, die beispielsweise in EP-A-0 391 368 beschrieben ist. Die Kondensation mit Acetanhydrid ist auch in Lösung oder in disperser oder emulgierter Phase möglich.

Bevorzugt erfolgt die Verknüpfung der Monomere über Esterbindungen (Polyester), Amidbindungen (Polyesteramid/Polyamid) und/oder über Imidbindungen (Polyesterimid/Polyimid), jedoch kann die Verknüpfung auch über andere bekannte Verknüpfungsarten erfolgen.

Bei der Auswahl der Monomerbausteine ist darauf zu achten, daß die dem Fachmann bekannte Stöchiometrie der funktionellen Gruppen gewährleistet ist, d. h. daß funktionelle Gruppen, die miteinander in der Polykondensationsreaktion reagieren, in entsprechenden molaren Verhältnissen eingesetzt werden. Beispielsweise bei Verwendung von Dicarbonsäuren und Diolen sollte eine der Anzahl an Carboxylgruppen entsprechende Anzahl an Hydroxylgruppen vorhanden sein. Es können jedoch auch gezielte Überschüsse an funktionellen Gruppen, beispielsweise mehr Carboxygruppen als Hydroxygruppen, eingesetzt werden, um so beispielsweise das erzielbare Molekulargewicht zu steuern.

Anstelle der Carbonsäuren können auch Carbonsäurederivate, wie beispielsweise Säurechloride oder Carbonsäureester, eingesetzt werden. Anstelle der Hydroxykomponenten können auch entsprechende Hydoxyderivate, wie beispielsweise die acetylierten Hydroxyverbindungen, eingesetzt werden.

Die cholesterischen flüssigkristallinen Polymere können auch vernetzbare Gruppen enthalten, so daß es möglich ist, ein orientiertes Flüssigkristallpolymer durch beispielsweise eine Photovernetzung, die vorzugsweise nach der Extrusion stattfindet, zu fixieren.

In einer bevorzugten Ausführungsform weisen die flüssigkristallinen Polymere eine sehr geringe Löslichkeit auf, so daß ihre Molekulargewichte nicht mit kommerziell üblichen Methoden (GPC, Lichtstreuung) bestimmt werden können. Als Maß für das Molekulargewicht kann die intrinsische Viskosität der Polymere in einer Lösung aus Pentafluorphenol/Hexafluorisopropanol herangezogen werden. Geeignet sind Polymere mit einer intrinsischen Viskosität zwischen 0,1 dl/g und 10 dl/g bei einer Temperatur von 25°C.

Die vorstehend beschriebenen cholesterischen Flüssigkristallpolymere können direkt im Sinne der Erfindung eingesetzt werden. Es ist jedoch auch möglich, Blends aus den cholesterischen flüssigkristallinen Polymeren herzustellen. Die Blends können entweder aus verschiedenen cholesterischen flüssigkristallinen Polymeren bestehen, es ist jedoch auch möglich, die cholesterischen flüssigkristallinen Polymere mit cholesterischen oder nematischen Polymeren zu mischen. Die Blends können auch erst während der Coextrusion hergestellt werden.

Weiterhin ist es möglich, die thermoplastischen cholesterischen Polymere mit Farbmitteln zu mischen, wobei spezielle coloristische Effekte erzielt werden können. Unter Farbmittel werden hierbei sowohl Pigmente als auch Farbstoffe verstanden. Die Pigmente können sowohl anorganischer als auch organischer Natur sein. Als anorganische Pigmente seien beispielsweise genannt: Titandioxid, Eisenoxide, Metalloxid-Mischphasenpigmente, Cadmiumsulfide, Ultramarinblau- oder Chromat-Molybdat-Pigmente. Als organische Pigmente können alle dem Fachmann aus der einschlägigen Literatur, z.B. W. Herbst, K. Hunger, Industrielle Organische Pigmente, VCH Verlag, 1987, hinlänglich bekannten Pigmente eingesetzt werden, z.B. Graphit, Ruß, Anthanthron-, Dioxazin-, Phthalocyanin-, Chinacridon-, Diketopyrrolopyrrol-, Perylen-, Perinon-, Azomethin-, Isoindolin- oder Azopigmente. Geeignete Farbstoffe sind beispielsweise Chinophthalin-, Perinon-, Anthrachinon-, Azomethinkomplex-, Azalacton- und Azofarbstoffe. Die Farbstoffe können im cholesterischen Flüssigkristallpolymer vollständig oder teilweise gelöst sein.

Um spezielle coloristische Effekte zu erzielen, können als Farbmittel auch Mischungen verschiedener Pigmente oder Farbstoffe oder Mischungen von Farbstoffen mit Pigmenten eingesetzt werden.

Die Mengenverhältnisse zwischen dem cholesterischen flüssigkristallinen Polymer und dem Farbmittel können in weiten Grenzen schwanken und sind abhängig von der Art des Farbmittels und dem jeweils gewünschten Farbeffekt. Im allgemeinen enthält ein eingefärbtes Polymer 0,1 bis 10 Gew.-% an Farbmittel. Weiterhin können 0 bis 10 Gew.-%, vorzugsweise 0 bis 5 Gew.-%, bezogen auf das Gesamtgewicht, an üblichen Hilfsstoffen und Additiven aus der Gruppe der nichtionogenen, anionischen oder kationischen Tenside, synthetischen und/oder natürlichen Wachse, synthetischen und/oder natürlichen Fettsäuren oder Fettsäureestern, Stabilisatoren (z.B. UV- oder Wärmestabilisatoren, Antioxidantien), Antistatika und optischen Aufheller in dem cholesterischen Flüssigkristallpolymer enthalten sein.

Farbmittel und/oder Hilfsstoffe und Additive werden mit dem cholesterischen Flüssigkristallpolymer vermischt, bis eine homogene Verteilung vorliegt. Die Vermischung erfolgt am günstigsten in der Schmelze des cholesterischen Flüssigkristallpolymeren. Das Vermischen kann mit allen dafür geeigneten Mischaggregaten, wie beispielsweise Dispersionsknetern, Banburry-Knetern oder Schneckenknetern, oder durch Extrusion, beispielsweise in einem Ein- oder Zweischneckenkneter, erfolgen. Insbesondere bei der Extrusion kann auch von einer pulverförmigen Mischung der Zusatzstoffe mit dem cholesterischen flüssigkristallinen Polymer ausgegangen werden.

Das Farbmittel kann auch direkt während der Herstellung des cholesterischen flüssigkristallinen Polymers, zweckmäßigerweise gegen Ende der Polykondensationsreaktion, vorzugsweise unmittelbar vor dem Austrag des fertigen Polymers, zugegeben werden.

Auch ist es möglich, das Farbmittel in Form eines Masterbatchs in das cholesterische Flüssigkristallpolymer einzuarbeiten. Als Träger für einen Masterbatch können synthetische und natürliche Wachse, Polymere und Kautschuke eingesetzt werden. Bevorzugter Träger für einen Masterbatch ist jedoch das cholesterische Flüssigkristallpolymer selbst. Der Masterbatch kann ein Pigment oder einen Farbstoff oder auch eine Mischung verschiedener Pigmente und/oder Farbstoffe enthalten. Auch können in den Masterbatch weitere Hilfsstoffe und/oder Additive eingearbeitet werden. Die Herstellung solcher Masterbatchs kann nach allen bekannten Verfahren durchgeführt werden, beispielsweise durch inniges Vermischen der Farbmittel mit dem Träger in der Schmelze in geeigneten Mischaggregaten, z.B. Dispersionsknetern, Banburry-Knetern oder Schneckenknetern, z.B. Zweischneckenkneter. Die Einfärbung des cholesterischen flüssigkristallinen Polymers mit dem Masterbatch kann durch Mischen der beiden Materialien und anschließendem Extrudieren erfolgen. Auch kann der Masterbatch als Schmelze in die Schmelze des cholesterischen Flüssigkristallpolymeren über einen Seitenextruder und/oder eine Schmelzepumpe zudosiert werden. Am wirtschaftlichsten erfolgt dies beim Austrag des cholesterischen flüssigkristallinen Polymers aus dem Reaktor nach der Polykondensation.

Die Einarbeitung der Farbmittel und/oder Hilfsstoffe und Additive bzw. des Masterbatchs kann selbstverständlich auch erst bei der Herstellung der Polymerlaminate nach dem erfindungsgemäßen Verfahren erfolgen. Die Zusatzstoffe können hierbei dem cholesterischen Flüssigkristallpolymer oder dem Blend vor der Extrusion zugemischt werden oder in Form des Masterbatchs über einen Seitenextruder und/oder eine Schmelzepumpe in die Schmelze des cholesterischen Flüssigkristallpolymeren dosiert werden.

Die nach den vorstehend beschriebenen Verfahren hergestellten eingefärbten flüssigkristallinen Polymere liegen normalerweise als physikalische Mischung aus Farbmittel und Polymer vor. Da bei dem Herstellungsverfahren in der Regel auch bei höheren Temperaturen gearbeitet wird, kann es nicht ausgeschlossen werden, daß im Falle von Farbmitteln mit funktionellen Gruppen wie Carboxyl, Sulfo oder Hydroxyl zumindest teilweise eine chemische Bindung an das cholesterische flüssigkristalline Polymer stattfindet.

Gegenstand der vorliegenden Erfindung ist auch ein Verfahren zur Herstellung von Effektpigmenten, dadurch gekennzeichnet, daß, wie vorstehend beschrieben, ein oder mehrere thermoplastische cholesterische Flüssigkristallpolymere durch Coextrusion mit einem oder mehreren Thermoplasten als Trägerfolie zu dünnen Filmen verarbeitet werden, anschließend die flüssigkristallinen Polymerfilme von den Trägerpolymerfilmen getrennt und die flüssigkristallinen Polymerfilme in die für Effektpigmente geeignete Plättchengröße und -form gebracht werden.

Die für Effektpigmente infrage kommenden thermoplastischen cholesterischen Flüssigkristallpolymere sind selbst nicht geeignet, um daraus nach den herkömmlichen Verfahren, z.B. Blasextrusion oder Flachfolienextrusion, dünne Folien herzustellen. Die speziellen optischen Eigenschaften der cholesterischen Flüssigkristallpolymere werden erst beobachtet, wenn die Moleküle oberhalb der Chiralisierungstemperatur des Polymeren die helikale Struktur ausbilden. Die Wellenlänge der Selektivreflexion der eingesetzten cholesterischen Flüssigkristallpolymere wird durch die Ganghöhe der helikalen Struktur bestimmt. Die Ganghöhe ist abhängig von der Struktur des Polymeren, der Schmelzviskosität, der Gegenwart von Lösemitteln und insbesondere von der Verdrillungskraft des chiralen Monomers ("helical twisting power"). Sie ist außerdem eine Funktion der Temperatur. Zur optimalen und raschen Ausbildung der Helix werden die thermoplastischen cholesterischen Flüssigkristallpolymere daher bevorzugt bei Temperaturen, die über der Chiralisierungstemperatur und damit deutlich über deren Schmelztemperaturen liegen, zu dünnen Filmen verarbeitet.

Zur Herstellung plättchenförmiger Effektpigmente aus den cholesterischen Flüssigkristallfilmen kann das durch die Coextrusion erhaltene Polymerlaminat in seine Komponenten - cholesterisches Flüssigkristallpolymer bzw. cholesterisches Flüssigkristallpolymer-Laminat und Trägerpolymer - separiert werden. Dies kann z.B. derart erfolgen, daß die coextrudierten Folien in einer Schneidmühle grob gemahlen und das Trägerpolymer mit Lösemitteln extrahiert wird. In einer bevorzugten Arbeitsweise wird das grobgemahlene Coextrudat in einer geeigneten Flüssigkeit, besonders bevorzugt Wasser, in denen beide Komponenten unlöslich sind, gut verrührt, z.B. mit Hilfe eines Dissolvers, und die Komponenten anschließend über ihre Dichteunterschiede voneinander getrennt. Die erhaltenen Effektpigmentplättchen können durch Mahlung und/oder Siebung auf die gewünschte Teilchengröße gebracht werden, wobei eine plättchenförmige Geometrie erhalten werden sollte, d.h. ein Plättchendurchmeser, der mindestens zwei- bis dreimal so groß wie die Plättchendicke ist.

Um einen optimalen Farbeineindruck durch selektive Reflexion zu erhalten, müssen die Effektpigmente eine möglichst ebene flächige Form aufweisen. Die Dicke solcher plättchenförmigen Effektpigmente liegt in der Regel zwischen 1 µm und 100 µm, bevorzugt zwischen 1 µm und 25 µm und insbesondere zwischen 3 µm und 15 µm. Je nach gewünschter Anwedung können aber auch hiervon abweichende Schichtdicken zweckmäßig sein.

Gegenstand der vorliegenden Erfindung ist weiterhin ein Polymerlaminat, bestehend im wesentlichen aus einem oder mehreren thermoplastischen cholesterischen flüssigkristallinen Polymerfilm(en) und einem oder mehreren thermoplastischen Trägerpolymerfilm(en), wobei das cholesterische flüssigkristalline Polymer ein Hauptkettenpolymer ist, das im wesentlichen aus
a) 0 bis 99,8 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 50 Mol% mindestens einer Verbindung aus der Gruppe der aromatischen Dicarbonsäuren und cycloaliphatischen Dicarbonsäuren;
c) 0 bis 50 Mol% mindestens einer Verbindung aus der Gruppe der aromatischen und cycloaliphatischen Diole, aromatischen Diamine und aromatischen Hydroxyamine;
d) 0,1 bis 40 Mol%, vorzugsweise 1 bis 25 Mol%, an chiralen, bifunktionellen Comonomeren; wobei die Summe 100 Mol% ergibt,
besteht.

Polymerlaminate bestehen aus mindestens einem thermoplastischen flüssigkristallinen Polymerfilm und mindestens einem thermoplastischen Trägerpolymerfilm. Der flüssigkristalline Polymerfilm selbst kann dabei aus 1 oder mehreren, z.B. 1, 2, 3, 4 oder 5, übereinandergelagerten flüssigkristallinen Polymerschichten bestehen. Der Trägerpolymerfilm kann den flüssigkristallinen Polymerfilm einseitig oder beidseitig bedecken.
Im Falle einer vorstehend beschriebenen Multi-Layer-Coextrusion wird der einseitig von dem Trägerpolymerfilm (T) bedeckte flüssigkristalline Polymerfilm (F) durch Teilen und Übereinanderführen verdoppelt, so daß ein Polymerlaminat der Filmfolge T-F-T-F entsteht. Durch weitere Wiederholungen dieses Vorgangs entstehen Polymerlaminate mit vorzugsweise bis zu 256 übereinandergelagerten Filmen in alternierender Reihenfolge T-F.

Die Dicke eines thermoplastischen cholesterischen Polymerfilms ist zweckmäßigerweise 1 bis 100 µm, vorzugsweise 1 bis 25 µm, insbesondere 3 bis 15 µm. Die Dicke eines thermoplastischen Trägerpolymerfilms kann in weiten Grenzen schwanken, z.B. von 3 µm bis 2 mm.

Gegenstand der Erfindung ist auch die Verwendung eines Polymerlaminats zur Herstellung von Effektpigmenten mit einem vom Blickwinkel abhängigen Farbeindruck für die Einfärbung von Lacken, Kosmetika und als Druckpigmente, beispielsweise für den Sicherheitsdruck oder den dekorativen Verpackungsdruck.

Lacke, die die erfindungsgemäßen Effektpigmente enthalten, können für die Lackierung von natürlichen und synthetischen Materialien, beispielsweise Holz, Metall oder Glas, insbesondere der Karosserie oder von Karosserieteilen von Kraftfahrzeugen, verwendet werden.

Die erfindungsgemäß hergestellten Effektpigmente können auch in Komponenten für berührungslose Druckverfahren eingesetzt werden, beispielsweise in elektrophotographischen Tonern und Entwicklern und in Ink-Jet-Tinten.

In den folgenden Beispielen bedeuten Teile Gewichtsteile.

### Beispiele zur Herstellung der cholesterischen Flüssigkristallpolymeren:

### Beispiel A:

28218 Teile 2-Hydroxy-6-naphthoesäure, 34530 Teile 4-Hydroxy-benzoesäure, 8307 Teile Terephthalsäure, 1862 Teile 4,4'-Dihydroxybiphenyl und 5846 Teile 1,4:3,6-Dianhydro-D-sorbit (Isosorbid) werden in einem Reaktor mit 52680 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert. Das Polymer hat eine brillante, grünstichig gelbe Farbe, die bei schrägem Anblick blaustichig grün erscheint. Die Farbe tritt schon während der Kondensation im Vakuum auf und bleibt nach dem Abkühlen erhalten.

### Beispiel B:

28218 Teile 2-Hydroxy-6-naphthoesäure, 34530 Teile 4-Hydroxy-benzoesäure, 8307 Teile Terephthalsäure, 3491 Teile 4,4'-Dihydroxybiphenyl und 4795 Teile 1,4:3,6-Dianhydro-D-sorbit (Isosorbid) werden in einem Reaktor mit 52680 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert. Das Polymer hat eine brillante, goldgelbe Farbe, die bei schrägem Anblick grün erscheint. Die Farbe tritt schon während der Kondensation im Vakuum auf und bleibt nach dem Abkühlen erhalten.

### Beispiel C:

28218 Teile 2-Hydroxy-6-naphthoesäure, 34530 Teile 4-Hydroxy-benzoesäure, 8307 Teile Terephthalsäure, 2793 Teile 4,4'-Dihydroxybiphenyl und 5115 Teile 1,4:3,6-Dianhydro-D-sorbit (Isosorbid) werden in einem Reaktor mit 52680 Teilen Essigsäureanhydrid versetzt und mit einem leichten Stickstoffstrom durchspült. Die Mischung wird unter Rühren innerhalb von 15 Minuten auf 140°C erhitzt und diese Temperatur für 30 Minuten gehalten. Danach wird die Temperatur innerhalb von 165 Minuten auf 325°C erhöht und die Schmelze 30 Minuten bei dieser Temperatur weiter gerührt. Ab ca. 220°C beginnt Essigsäure abzudestillieren. Danach wird die Stickstoffspülung abgebrochen und langsam Vakuum angelegt. Die Schmelze wird für weitere 30 Minuten unter Vakuum (ca. 5 mbar) gerührt. Danach wird mit Stickstoff belüftet und das Polymer mit einem Extruder ausgetragen und pelletiert. Das Polymer hat eine brillante, kupfrig orange Farbe, die bei schrägem Anblick rotstichig gelb erscheint. Die Farbe tritt schon während der Kondensation im Vakuum auf und bleibt nach dem Abkühlen erhalten.

### Beispiele zur Herstellung von Effektpigmenten nach dem erfindungsgemäßen Verfahren:

### Beispiel 1:

Die Multi-Layer-Versuchsanlage besteht aus zwei Einschneckenextrudern (Schneckendurchmesser 20 mm), an denen Schmelzepumpen angeschlossen sind. Die Schmelzepumpen gewährleisten einen gleichmäßigen, pulsationsfreien Fluß der Schmelzen. Die Schmelzenströme werden im Übergangsstück übereinandergeführt und in den angeschlossenen Verfahrenselementen ("die-Elemente") quer zur Überlagerungsebene geteilt, wieder übereinandergeführt und auf gleichen Querschnitt gebracht. Es sind 6 die-Elemente angeschlossen, so daß sich ein Aufbau von 128 Schichten ergibt. Der Austrag erfolgt über eine Breitschlitzdüse. Cholesterisches Flüssigkristallpolymer nach Beispiel A wird bei 270°C Schmelzentemperatur im Extruder 1 extrudiert. Im Extruder 2 wird Polystyrol (MFI 200°C/5 kg 7 g/10 min) extrudiert. Die Schmelzenströme werden in gleichem Volumenverhältnis gefördert. Der Durchsatz beträgt 4 kg/h. Es wird ein Band mit 1mm Dicke und 5 cm Breite abgezogen. Das Band zeigt eine grünstichig gelbe Farbe, die bei schrägem Anblick blaustichig grün erscheint. Die einzelnen Schichten sind sehr gut ausgebildet.

Zur Herstellung des Effektpigments wird das Band in einer Schneidmühle grob gemahlen, das Polystyrol mit Toluol herausgelöst und der Rückstand nach dem Trocknen in einer Universalmühle gemahlen. Das Mahlgut wird zur Verengung der Teilchengrößenverteilung über ein Sieb mit 63 µm Maschenweite gesiebt.

Das erhaltene Effektpigment wird in einen 2-Komponenten-Klarlack eingearbeitet, auf ein schwarzgrundiertes Blech aufgesprüht und mit Klarlack überzogen. Nach dem Einbrennen zeigt der Lack eine brillante, grünstichig gelbe Farbe, die bei schrägem Anblick blaustichig grün erscheint.

### Beispiel 2

Die Herstellung der Multi-Layer geschieht wie im Beispiel 1 beschrieben. Als cholesterisches Flüssigkristallpolymer wird das in Beispiel B beschriebene Polymer eingesetzt. Als Trägerpolymer wird LD-Polyethylen (MFI 190°C/2,16 kg 0,3 g/10 min) verwendet. Das erhaltene Band zeigt eine brillante goldgelbe Farbe, die bei schrägem Anblick grün erscheint.

Das grobgemahlene Band wird in Wasser, dem man zum besseren Benetzen 0,1 % einer nichtionogen Verbindung zugegeben hat, im Dissolver 30 Min. bei 5000 Upm gerührt. Hierbei werden die spröderen cholesterischen Flüssigkristallpolymerfilme weiter zerkleinert und vom Polyethylen mechanisch gelöst. Aufgrund der höheren Dichte der flüssigkristallinen Polymerplättchen (Dichte 1,3-1,5 g/cm³) sinken sie nach Abschalten des Rührers nach unten, während die Polyethylenteilchen auf dem Wasser aufschwimmen und abgeschöpft werden können. Die weitere Bearbeitung erfolgt wie in Beispiel 1 beschrieben.

Das erhaltene Effektpigment zeigt im Lack eine brillante goldgelbe Farbe, die bei schrägem Anblick grün erscheint.

## Patentansprüche

1. Verfahren zur Herstellung von Polymerlaminaten, dadurch gekennzeichnet, daß ein oder mehrere thermoplastische cholesterische flüssigkristalline Polymere mit einem oder mehreren thermoplastischen Trägerpolymeren coextrudiert und in Form dünner Filme übereinandergelagert werden.

2. Verfahren nach Anspruch 1, dadurch gekennzeichnet, daß 1, 2, 3, 4 oder 5 Schichten von thermoplastischen cholesterischen flüssigkristallinen Polymeren durch Coextrusion in dünnen Schichten übereinander geführt und von einem thermoplastischen Trägerpolymer einseitig oder beidseitig bedeckt werden.

3. Verfahren nach Anspruch 1 oder 2, dadurch gekennzeichnet, daß ein oder mehrere thermoplastische cholesterische flüssigkristalline Polymere mit einem Farbmittel eingefärbt worden sind.

4. Verfahren nach mindestens einem der Ansprüche 1 bis 3, dadurch gekennzeichnet, daß die thermoplastischen cholesterischen flüssigkristallinen Polymere Hauptkettenpolymere aus der Gruppe der Polyester, Polyamide und Polyesteramide sind.

5. Verfahren nach mindestens einem der Ansprüche 1 bis 4, dadurch gekennzeichnet, daß die thermoplastischen cholesterischen flüssigkristallinen Polymere im wesentlichen aus
a) 0 bis 99,8 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 50 Mol% mindestens einer Verbindung aus der Gruppe der aromatischen Dicarbonsäuren und cycloaliphatischen Dicarbonsäuren;
c) 0 bis 50 Mol% mindestens einer Verbindung aus der Gruppe der aromatischen und cycloaliphatischen Diole, aromatischen Diamine und aromatischen Hydroxyamine;
d) 0,1 bis 40 Mol%, vorzugsweise 1 bis 25 Mol%, an chiralen, bifunktionellen Comonomeren; wobei die Summe 100 Mol% ergibt,
bestehen.

6. Verfahren nach mindestens einem der Ansprüche 1 bis 5, dadurch gekennzeichnet, daß die thermoplastischen cholesterischen flüssigkristallinen Polymere ein oder mehrere Monomere aus der Gruppe p-Hydroxybenzoesäure, 2-Hydroxy-6-naphthoesäure, Terephthalsäure, Isophthalsäure, 2,6-Naphthalindicarbonsäure, Hydrochinon, Resorcin und 4,4'-Dihydroxybiphenyl sowie Camphersäure, Isosorbid oder Isomannid als chirale Komponente, enthalten.

7. Verfahren nach mindestens einem der Ansprüche 1 bis 6, dadurch gekennzeichnet, daß das thermoplastische Trägerpolymer Polyethylen, Polypropylen, Polystyrol, Polycarbonat, Polyester, Polyamid oder Styrolacrylnitril-Copolymer ist.

8. Verfahren nach mindestens einem der Ansprüche 3 bis 7, dadurch gekennzeichnet, daß das Farbmittel ein anorganisches oder organisches Pigment, Graphit, Ruß oder ein Farbstoff ist.

9. Verfahren zur Herstellung eines Effektpigments, dadurch gekennzeichnet, daß man ein Polymerlaminat nach einem oder mehreren der Ansprüche 1 bis 8 herstellt, anschließend die flüssigkristallinen Polymerfilme von den Trägerpolymerfilmen trennt und die flüssigkristallinen Polymerfilme zerkleinert, bis plättchenförmige Teilchen entstehen.

10. Polymerlaminat, bestehend im wesentlichen aus einem oder mehreren thermoplastischen cholesterischen flüssigkristallinen Polymerfilm(en) und einem oder mehreren thermoplastischen Trägerpolymerfilm(en), wobei das cholesterische flüssigkristalline Polymer ein Hauptkettenpolymer ist, das im wesentlichen aus
a) 0 bis 99,8 Mol% mindestens einer Verbindung aus der Gruppe der aromatischen Hydroxycarbonsäuren, cycloaliphatischen Hydroxycarbonsäuren und aromatischen Aminocarbonsäuren;
b) 0 bis 50 Mol% mindestens einer Verbindung aus der Gruppe der aromatischen Dicarbonsäuren und cycloaliphatischen Dicarbonsäuren;
c) 0 bis 50 Mol% mindestens einer Verbindung aus der Gruppe der aromatischen und cycloaliphatischen Diole, aromatischen Diamine und aromatischen Hydroxyamine;
d) 0,1 bis 40 Mol%, vorzugsweise 1 bis 25 Mol%, an chiralen, bifunktionellen Comonomeren; wobei die Summe 100 Mol% ergibt,
besteht.

11. Polymerlaminat nach Anspruch 10, dadurch gekennzeichnet, daß ein thermoplastischer cholesterischer Polymerfilm aus 1, 2, 3, 4 oder 5 übereinandergelagerten flüssigkristallinen Polymerschichten besteht.

12. Polymerlaminat nach Anspruch 10 oder 11, dadurch gekennzeichnet, daß das thermoplastische Trägerpolymer Polyethylen, Polypropylen, Polystyrol, Polycarbonat, Polyester, Polyamid oder Styrolacrylnitril-Copolymer ist.

13. Polymerlaminat nach mindestens einem der Ansprüche 10 bis 12, dadurch gekennzeichnet, daß eine oder mehrere der flüssigkristallinen Polymerschichten mit einem Farbstoff oder einem Pigment eingefärbt ist.

14. Verwendung eines Polymerlaminats nach mindestens einem der Ansprüche 10 bis 13 zur Herstellung von Effektpigmenten für die Einfärbung von Kosmetika, Lacken und Druckfarben.
